# EUROPÄISCHE PATENTSCHRIFT

(11) **EP 0 564 496 B1**
(45) Veröffentlichungstag und Bekanntmachung des Hinweises auf die Patenterteilung: **25.10.1995**
(21) Anmeldenummer: 92901088.2
(22) Anmeldetag: 16.12.1991
(51) Int. Cl.: H04L 12/56

(54) **VERFAHREN ZUR VERMITTLUNG VON NACHRICHTEN**
PROCESS FOR TRANSMITTING INFORMATION
PROCEDE DE TRANSMISSION D'INFORMATIONS

(30) Priorität: 24.12.1990 EP 90314273
(43) Veröffentlichungstag der Anmeldung: 13.10.1993
(73) Patentinhaber: SIEMENS AKTIENGESELLSCHAFT, 80333 München (DE); INMOS LIMITED, Bristol BS12 4SQ (GB)
(72) Erfinder: HOFESTÄDT, Holm, Dr., D-8012 Riemerling (DE); THOMPSON, Peter, Bristol BS7 0DE (GB); REYZL, Erwin, D-8000 München 80 (DE)
(74) Vertreter: Fuchs, Franz-Josef, Dr.-Ing.
(86) Internationale Anmeldenummer: EP9102412
(87) Internationale Veröffentlichungsnummer: WO9211718

(56) Entgegenhaltungen:
- WO-A-89/09522
- US-A- 4 891 803
- THE COMPUTER JOURNAL. Bd. 30, Nr. 4, August 1987, CAMBRIDGE GB Seiten 298 - 307; J.VAN LEEUWEN ET AL: 'INTERVAL ROUTING'

## Beschreibung

Die Erfindung betrifft ein Verfahren zur Vermittlung von Nachrichten in Paketvermittlungsnetzwerken. In Paketvermittlungsnetzwerken wird eine Nachricht zwischen einem Sender und einem Empfänger nicht dadurch übermittelt, daß zwischen dem Sender und dem Empfänger eine dauernde Verbindung aufgebaut wird, über welche Nachrichten zwischen Sender und Empfänger übermittelt werden. Stattdessen werden die Nachrichten in Form von Paketen übermittelt, welche aus einem Adreßkopf und einem eigentlichen Nachrichtenteil mit möglicherweise variabler Länge bestehen, welche sich ihren Weg zum Empfänger durch das Netz selbstständig suchen. Dazu befindet sich an jedem Netzwerkknoten ein Vermittlungselement, welches die Adreßinformation eines jeden Paketes auswertet und das Paket längs eines geeigneten Weges weiterleitet.

Solche Paketvermittlungsnetzwerke werden in verschiedenen Bereichen der Kommunikations- und Datentechnik speziell im Bereich der Parallelrechner-Verbindungsnetzwerke verwendet. Mit Hilfe solcher Paketvermittlungsnetzwerke lassen sich bei gleicher Leitungskapazität erheblich mehr Nachrichten übertragen als in herkömmlichen Netzwerken, bei welchen zwischen jedem Sender und jedem Empfänger eine für dieses Sender-Empfängerpaar reservierte Leitung aufgebaut werden muß. Speziell in Parallelrechner-Verbindungsnetzwerken kommt es dabei auf einen höchstmöglichen Netzdurchsatz an, da die Rechenleistung eines Parallelrechner-Systems in empfindlicher Weise vom Netzdurchsatz seines Verbindungsnetzwerkes abhängt. In derartigen Paketvermittlungsnetzwerken kommt es bei entsprechender Aktivität der sendenden Einheiten immer wieder zu Blockierungen, welche den Netzdurchsatz stark herabsetzen. Diese werden durch eine entsprechende Erhöhung der Zahl der Ausgänge pro Vermittlungselement bzw. durch eine zentrale Steuerung des Netzwerkes vermeidbar, welche aber im allgemeinen zu unvertretbar hohen Kosten führen würden oder mit einer zentralen Steuerung des Netzwerkes verbunden wären, was nicht erwünscht ist.

Ein Ausgang eines Vermittlungselements ist blockiert, falls zu einer Zeit zwei oder mehr Pakete denselben Ausgang benötigen, um ihren Weg fortzusetzen. Bis auf eines müssen alle diese Pakete zwischengespeichert werden. Dies kann entweder vollständig innerhalb des betrachteen Vermittlungselementes geschehen oder auf mehrere Vermittlungselemente verteilt werden.

Aus der Literatur sind verteilte Verfahren bekannt, welche zur Vermittlung von Nachrichten in Paketvermittlungsnetzwerken verwendet werden. Diese Verfahren haben gemeinsam, daß an jedem Vermittlungsknoten des Netzwerkes zu jeder Empfängeradresse genau ein Ausgang gehört. Bei entsprechend hoher Auslastung eines Netzwerkes in Parallelrechner-Verbindungsnetzwerken kann es an einzelnen Ausgängen zu erheblichen Blockierungen kommen, bei denen eine große Zahl von Paketen zwischengespeichert werden muß. Durch diese Blockierungen und die mit diesen Blockierungen einhergehende Verringerung des Netzwerkdurchsatzes kann es in Parallelrechnersystemen zu empfindlichen Leistungsminderungen kommen.

Aus der US-Patentschrift US-A-4 891 803 ist bereits ein Verfahren zur Vermittlung von Nachrichten in einem Paketvermittlungsnetzwerk bekannt, bei dem jeder Zieladresse an einem Vermittlungselement eine Gruppe von Ausgängen dieses Vermittlungselements zugeordnet wird, wobei innerhalb einer Gruppe ein freier Ausgang gesucht wird und, falls alle Ausgänge einer Gruppe belegt sind, die Nachricht solange verzögert wird, bis einer der Ausgänge frei wird.

Das Verfahren gemäß der vorliegenden Erfindung unterschiedet sich von diesem Stand der Technik dadurch, daß im erfindungsgemäßen Verfahren die einzelnen Ausgänge einer Gruppe für verschiedene Netzwerkverbindungen zu den übrigen Vermittlungsknoten benutzt werden, und somit unterschiedlichen Übermittlungswegen innerhalb des Netzwerkes entsprechen, während beim bekannten Verfahren jeder Zieladresse N parallele, identische Ausgänge zugeordnet werden, welche an einem Zwischenspeicher angeschlossen sind. Diese bekannte Vorgehensweise hat den Nachteil, daß die den parallelen Ausgängen zugeordneten Nachrichten nichts destoweniger über einen Vermittlungsweg weitergeleitet werden. Durch diese Maßnahme wird also der Netzdurchsatz nicht in der angestrebten Weise erhöht.

Der Erfindung liegt die Aufgabe zugrunde, ein Verfahren zur Vermittlung von Nachrichten in Paktetvermittlungsnetzwerken anzugeben, welches die geschilderten Nachteile bekannter Verfahren vermeidet und welches geeignet ist, einen höheren Netzwerkdurchsatz in solchen Netzwerken zu bewirken. Diese Aufgabe wird mit Hilfe eines Verfahrens zur Vermittlung von Nachrichten mit Merkmalen nach Anspruch 1 gelöst.

Vorteilhafte Weiterbildungen des Verfahrens ergeben sich aus den Unteransprüchen.
- Figur 1: zeigt ein Parallelrechner-Netzwerk.
- Figur 2: zeigt einen Netzknoten des Netzwerkes aus Figur 1, welches aus einem Transputer mit einem Vermittlungselement (Router) besteht.
- Figur 3: verdeutlicht die erfindungsgemäße Verbesserung des Interval-Routings.

Im folgenden wird die Erfindung anhand eines bevorzugten Ausführungsbeispieles und anhand der Figuren näher beschrieben.

Ein typisches Anwendungsgebiet der Erfindung sind Verbindungsnetzwerke in Parallelrechnersystemen, da in solchen Systemen eine intensive Kommunikation zwischen den Systemelementen erforderlich ist, welche im allgemeinen zu einer hohen Netzwerkbelastung führt. Die Erfindung wirkt sich umso vorteilhafter aus, je höher die Netzwerkbelastung ist. Aus diesem Grunde wird die Erfindung im folgenden anhand eines Ausführungsbeispiels aus dem Bereich der Parallelrechner-Netzwerke beschrieben.

Eine wichtige Klasse von Parallelrechnersystemen bilden die sog. Transputersysteme. Die technischen Grundlagen dieser Systeme sind in der Veröffentlichung von D.May und P.Thompson, "Transputers and Routers: Components for Concurrent Machines", Proceedings of Japanese Occam User-Group, 1990, beschrieben. Die Veröffentlichung von D.Pountain, "Virtual Channels; The next generation of Transputers", BYTE April 90, Europe and World: 3-12, April 1990, enthält eine umfassende Darstellung der neuen Transputer Generation, welche mit virtuellen Adressen arbeitet. Die in dieser Beschreibung verwendeten Fachbegriffe aus dem Gebiet der Parallelrechnersysteme sind allgemein üblich und den zitierten Fachaufsätzen entnommen.

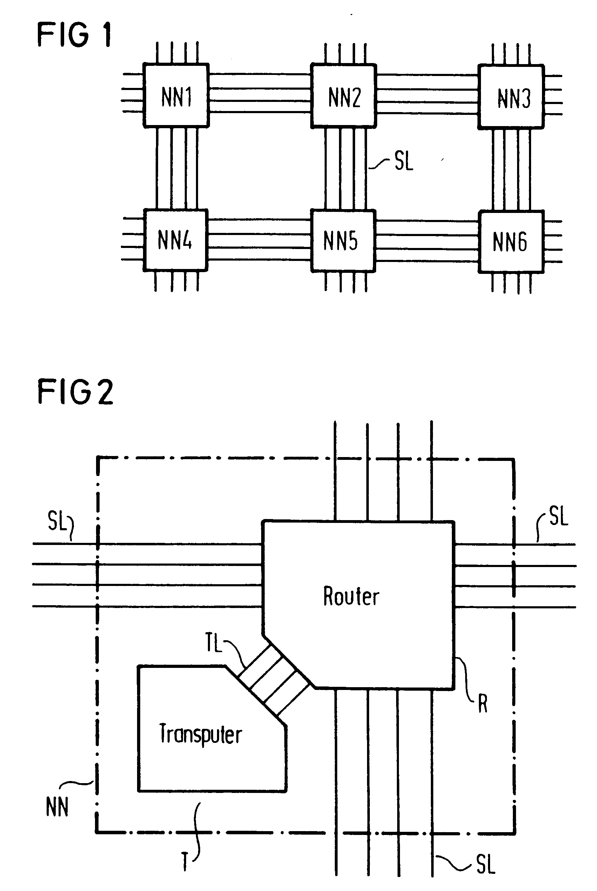

Die Figur 1 zeigt ein typisches Verbindungsnetzwerk mit sechs Netzwerkknoten NN1, ..., NN6. Jeder Verbindungsknoten hat dabei z.B. die in Figur 2 angegebene Form, welche aus einem Verbindungselement (Router) und einem Prozessorelement (Transputer) besteht. Jeder Netzwerkknoten ist wie in Figur 1 sichtbar über eine Anzahl von Netzwerkverbindungen SL mit weiteren Netzwerkknoten verbunden. Jeder Netzwerkknoten enthält, wie in Figur 2 dargestellt, ein Prozessorelement, z.B. einen Transputer, welcher über eine Anzahl von Transputer Links mit dem Verbindungselement verbunden ist. Während des Betriebs eines solchen Transputersystems müssen die einzelnen Prozessorelemente T im allgemeinen intensiv Nachrichten austauschen. Dabei müssen im allgemeinen Nachrichten von einem beliebigen Prozessorelement eines Netzwerkknotens NNi zu einem anderen beliebigen Netzwerkknoten NNj übertragen werden. Aus Kostengründen ist eine direkte Vernetzung aller Transputerelemente im allgemeinen nicht möglich.

Mit Hilfe von Transputerelementen und Vermittlungselementen lassen sich sehr verschiedene Netzwerktypen mit unterschiedlichen Prozessorzahlen und unterschiedlichen Netzwerktopologien aufbauen. Der sendende Transputer T1 übermittelt eine Nachricht an den empfangenden Transputer T2 in Form eines Pakets (variabler Länge), welches aus einem Adreßkopf und der eigentlichen Nachricht besteht. Dieses Paket gibt der sendende Transputer über eine seiner Verbindungen TL an den mit ihm verbundenen Vermittlungsbaustein, welcher daraufhin die weitere Vermittlung der Nachricht ausführt. Der Vermittlungsbaustein ordnet daraufhin die Zieladresse der Nachricht einer Gruppe von Ausgängen zu, welche zur Übermittlung der Nachricht an diese Zieladresse geeignet ist. Aus dieser Gruppe von Ausgängen sucht der Vermittlungsbaustein einen freien Ausgang heraus. Findet er einen freien Ausgang, dann gibt er die Nachricht an diesen freien Ausgang. Ist kein Ausgang der Gruppe frei, wird die zu übermittelnde Nachricht in einer Warteschlange zwischengespeichert, bis ein Ausgang innerhalb der Gruppe frei geworden ist.

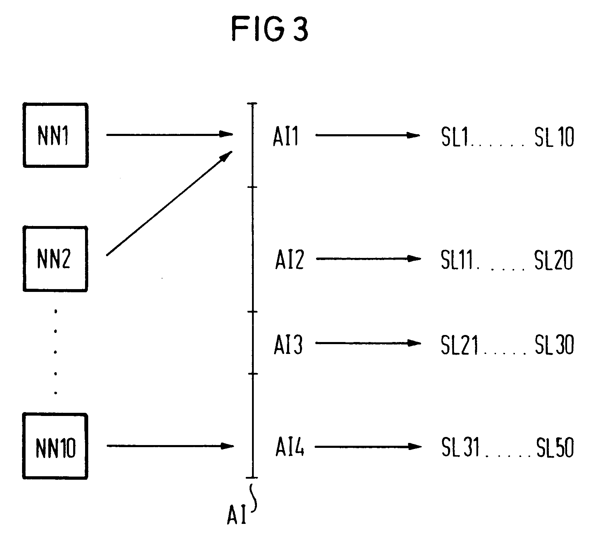

Die Zuordnung einer Gruppe von Ausgängen zu einer Zieladresse kann in verschiedenen Weisen erfolgen. Eine bevorzugte Methode geht vom bekannten Interval-Routing aus. Die Methode des Interval-Routing ist in der Veröffentlichung von J.van Leeuwen, R. B.Tan: "Interval-Routing", The Computer Journal, Vol. 30, No. 4, 1987, pp. 298-307, beschrieben. Bei dieser Methode wird der gesamte Adreßraum, d.h., die Menge aller Zieladressen auf ein Adreßintervall AI, wie in Figur 3 sichtbar, abgebildet. Dieses Adreßintervall ist in mehrere Teilintervalle AI1..., AI4 unterteilt. Jeder Zieladresse ist ein Adreßteilintervall zugeordnet. Beim bekannten Interval Routing ist jedem Adreßteilintervall AIn eindeutig ein Ausgang zugeordnet. Erfindungsgemäß wird nun stattdessen jedem Adreßteilintervall AIn ein Intervall von Ausgängen zugeordnet.

Fällt nun die Zieladresse eines Pakets in ein Adreßteilintervall AIn, dann wird in der Gruppe ein freier Ausgang gesucht. Gibt es einen solchen freien Ausgang, dann wird das Paket über diesen weitergeleitet. Andernfalls muß das Paket zwischengespeichert und in eine Warteschlange eingereiht werden. Die Suche nach einem freien Ausgang kann dabei wie folgt ablaufen (s. beigefügtes Modula2-Programm):
Ein lokaler Zeiger (nextout), der der Gruppe von Netzwerkverbindungen zugeordnet ist, zeigt vor dem Suchvorgang auf den Nachfolger desjenigen Ausgangs, über welchen zuletzt ein Paket dieser Gruppe geleitet wurde. Der Zeiger läuft nun ab dieser Position sukzessive über alle Ausgänge der Gruppe bis ein freier Ausgang gefunden ist. Dies kann z.B. über ein entsprechendes Signal (Flag) an den Ausgängen angezeigt werden. Wird ein freier Ausgang gefunden, so wird das Paket über diesen weitergeleitet und der Zeiger bleibt auf der Nachfolgeposition stehen. Andernfalls wird das Paket in die Warteschlange desjenigen Ausgangs eingereiht, auf welchen der Zeiger vor dem Suchvorgang zeigte und der Zeiger wird auf den nachfolgenden Ausgang dieser Gruppe gesetzt.

Außer der Methode des Intervall Routing läßt sich jede deterministische Routing Methode in dieser Weise verallgemeinern. Anstelle einer eindeutigen Netzwerkverbindung wird dabei erfindungsgemäß mit jeder Zieladresse eine Gruppe von Netzwerkverbindungen assoziiert. Auf diese Weise wird nicht nur die optimale Netzwerkverbindung zur Übermittlung einer Nachricht an eine Zieladresse genutzt, sondern auch weitere (möglicherweise) fast-optimale Netzwerkverbindungen. Auf diese Weise wird die Wahrscheinlichkeit einer Blockierung einer Netzwerkverbindung erheblich vermindert. Auf dieser Idee beruht das Wirkungsprinzip der Erfindung.

Simulationsergebnisse weisen daraufhin, daß bei hoher Netzwerkauslastung der Durchsatz eines binary-cube-Netzwerkes mit Hilfe der Erfindung um mehr als 20% erhöht werden kann.

## Patentansprüche

1. Verfahren zur Vermittlung von Nachrichten an Zieladressen in Netzen mit Vermittlungselementen, bei dem
- jeder Zieladresse an jedem Vermittlungselement eine Gruppe von Ausgängen dieses Vermittlungselements zugeordnet wird,
- innerhalb dieser Gruppe ein freier Ausgang gesucht wird, und
- die Nachricht verzögert wird, solange innerhalb der Gruppe kein Ausgang frei ist,
**dadurch gekennzeichnet,**
daß die einzelnen Ausgänge einer Gruppe mit verschiedenen Vermittlungswegen verbunden sind.

2. Verfahren nach Anspruch 1,
dadurch **gekennzeichnet,**
daß die Zuordnung einer Gruppe von Ausgängen in der Weise erfolgt, daß jeder ZIeladresse eine Teilmenge aller Zieladressen und jeder dieser Teilmengen eine Gruppe von Ausgängen zugeordnet wird.

3. Verfahren nach Anspruch 2,
dadurch **gekennzeichnet,**
daß
- der Menge aller Zieladressen ein Adressenintervall zugeordnet wird, welches in Adressenteilintervalle unterteilt wird,
- der Menge aller Ausgänge ein Ausgangsintervall zugeordnet wird, welches in Ausgangsteilintervalle unterteilt wird und daß
- jedem Adressenteilintervall ein Ausgangsteilintervall zugeordnet wird.

## Claims

1. Process for routing messages to target addresses in networks with switching elements, in which process
- each target address at each switching element is allocated a group of outputs of this switching element,
- within this group, a search is made for a free output and
- the message is delayed as long as there is no output free within the group,
characterized in that the individual outputs of a group are connected to different routing paths.

2. Process according to Claim 1, characterized in that the allocation of a group of outputs takes place in such a way that each target address is allocated a subset of all the target addresses and each of these subsets is allocated a group of outputs.

3. Process according to Claim 2, characterized in that
- the set of all target addresses is allocated an address interval which is subdivided into address sub-intervals,
- the set of all outputs is allocated an output interval which is subdivided into output sub-intervals and in that
- each address sub-interval is allocated an output sub-interval.

## Revendications

1. Procédé pour la transmission d'informations en direction d'adresses de destination dans des réseaux comportant des éléments de transmission, selon lequel
- à chaque adresse de destination est associé, dans chaque élément de transmission, un groupe de sorties de cet élément de transmission,
- une sortie libre est recherchée à l'intérieur de ce groupe, et
- l'information est retardée tant qu'aucune sortie n'est libre à l'intérieur du groupe,
caractérisé par le fait que les différentes sorties d'un groupe sont reliées à différentes voies de transmission.

2. Procédé suivant la revendication 1, caractérisé par le fait que l'association d'un groupe de sorties s'effectue de telle sorte qu'à chaque adresse de destination est associée une quantité partielle de toutes les adresses de destination et qu'à chacune de ces quantités partielles est associé un groupe de sorties.

3. Procédé suivant la revendication 2, caractérisé par le fait que
- au nombre de toutes les adresses partielles est associé un intervalle d'adresse, qui est subdivisé en intervalles partiels d'adresse,
- au nombre de toutes les sorties est associé un intervalle de sortie, qui est subdivisé en intervalles partiels de sortie,
- à chaque intervalle partiel d'adresse est associé un intervalle partiel de sortie.
